Europäisches Patentamt

European Patent Office

Office européen des brevets

(19)

(11) Publication number: **0 041 091**

**A1**

(12) **EUROPEAN PATENT APPLICATION**

(21) Application number: **80630014.1**

(22) Date of filing: **29.05.80**

(51) Int. Cl.³: **F 28 D 21/00**
**F 24 D 3/00**

(43) Date of publication of application:
**09.12.81 Bulletin 81/49**

(84) Designated Contracting States:
**AT BE CH DE FR GB IT LI LU NL SE**

(71) Applicant: **Kadan, Bertram Z.**
**Greenfield Park P.O. Box 244**
**New York - 12435(US)**

(71) Applicant: **Kadan, Seymour**
**Greenfield Park P.O. Box 244**
**New York - 12435(US)**

(71) Applicant: **Kadan, Alvin**
**GReenfield Park P.O. Box 244**
**New York - 12435(US)**

(72) Inventor: **Kadan, Bertram Z.**
**Greenfield Park P.O. Box 244**
**New York - 12435(US)**

(72) Inventor: **Kadan, Seymour**
**Greenfield Park P.O. Box 244**
**New York - 12435(US)**

(72) Inventor: **Kadan, Alvin**
**GReenfield Park P.O. Box 244**
**New York - 12435(US)**

(74) Representative: **Weydert, Robert et al,**
**Office Dennemeyer S.à.r.l. 21-25 Allée Scheffer P.O. Box**
**41**
**L-Luxembourg(LU)**

(54) **Stack exhaust heat recycling system.**

(57) The stack (16) includes an inner shell (46) defining a passage (50) to carry the exhaust gases without essentially restricting the draft. Surrounding this shell in any desired configuration is tubing (56,58) carrying fluids (liquids, gas or oils). Surrounding the tubing is an intermediate shell (62), insulation (64) and an outer shell (66). During the passage of the fluid through the tubing, transfer of heat occurs from the gases to the fluid so that its temperature is elevated for use, e.g. as hot water, thus elminating or supplementing a hot water heater. Other uses requiring elevation of the temperature of water or gas may be similarly utilized.

FIG. 2

EP 0 041 091 A1

COMPLETE DOCUMENT

## STACK EXHAUST HEAT RECYCLING SYSTEM

This invention relates generally to a stack exhaust heat recycling system and more specifically, a system of utilizing exhaust gases passing up, for example, through smoke stacks by transferring the heat in such gases to raise or elevate the temperature of fluids.

In the past, fuels have been combusted in furnaces, and the exhaust gases have been conducted to the ambient atmosphere through passages such as smoke stacks. The exhaust gases tend to be of a very high temperature, and this heat is passed into ambient atmosphere. The heat generated by the furnace which is utilized, generally heats such things as water, to produce steam for steam plants or to drive electrical turbines in an electrical power generating plant. Other examples of usage are the heating of water in a hot water system, or to utilize the heat for heat sinks or heat pumps for air conditioners or heat pump systems. In all such situations, fuel is required to separably heat the fluid whose temperature is desired to be elevated. Such use of fuel results in low efficiency in that only part of the heat generated by combustion is utilized to heat the fluid. The remainder of the heat is dispersed into the atmosphere by the exhaust gases and lost as a waste product.

Accordingly, among the principal objects of the present invention is to provide an improved means of recycling heat from a stack exhaust system which will greatly increase the efficiency of the heat captured which would otherwise be lost in the atmosphere based upon the amount of BTU generated proportionally to the amount of fuel consumed per hour.

Still yet another object of the present invention is to provide means to allow transfer of heat from the exhaust gases to adjacent fluids, thus elevating the temperature of the fluids prior to introduction into the main heat receiving or temperature elevating location.

Still yet a further object of the present invention is to provide a heat recycling system which will result in a substantial increase in efficiency and output of JOULE per fuel consumption.

Still yet another object of the present invention is to provide a recycling system resulting in a series of passages containing fluids in continuous and adjacent relationship to the exhaust gases, allowing transfer of heat from the exhaust gases to the passages so that the temperature of the fluids will be elevated from the time of introduction to the time of exit from the system.

Still yet another object of the present system is to provide a heat recycling system which may be readily used in diverse operations as chemical plants, electrical generating stations, steam generating stations, and industrial air conditioning and heat pump systems without the addition of expensive and complex equipment.

Still yet another object of the present invention is to provide a system which may rapidly and simply be utilized for small systems, such as hot water heaters, or central air conditioning units for small units such as homes, as well as heat pump systems, without the installation of expensive and extensive supplementary units.

Still yet another object of the present invention is to provide a stack exhaust heat recycling system which will not only increase the efficiency based upon fuel consumption, but will result in energy conservation and reduction in pollutants emitted into the atmosphere, as well as insulating the stack and reducing the heat introduced into the adjacent ambient atmosphere.

In accordance with the terms of the present invention, there is provided a stack exhaust heat recycling system which generally consists of an existing stack base with a collar positioned on the top. Then, positioned on top of the collar is a stack construction in accordance with the terms of the present invention. Basically the construction consists of an inner shell defining a passageway for the exhaust gases. Adjacent or bonded to the inner shell is tubing which may extend either horizontally in coils or vertically in rows, but in any event, in such a manner as to cause a significant continuous exposure through the shell. The tubing has an inlet which is positioned in the collar and an outlet, also positioned in the collar. Alternatively, the inlet and outlet may be positioned at any convenient position along the height of the stack, either separate and apart from each other or adjacent to each other, as desired. For example, they could be located in either the bottom or top cap. The tubing is surrounded by an intermediate shell, and then insulation and then an outer shell. The purpose of the insulation is to prevent heat from escaping to the ambient atmosphere, while allowing the most substantial portion or heat transfer to occur from the exhaust gases into the (space) compartment defined between the inner and intermediate shells, containing the tubing. Thus heat is transferred from the exhaust gases to the fluid carried by the tubing. This tubing may be connected to the municipal water inlet line for example and by the time the water passes from the outlet, its temperature has been sufficiently elevated so that when it is introduced for example, to a boiler which receives the primary heat from the furnace to which the stack is connected, much less heat is required from the boiler to turn the water into steam.

Another example would be the use of a small unit in a house having a furnace in which the tubing coiled around the exhaust stack would be sufficient to elevate the temperature of water, thus generally eliminating the need for a separate hot water heater, or substantially reducing the amount of fuel needed to heat such water. Accordingly, the invention is useful for both commercial and domestic use.

These objects and advantages, as well as other objects and advantages of the present invention will become obvious after reading the accompanying detailed description together with the attached drawings, in which:

Figure 1 is a front perspective view illustrating the positioning of the stack embodying the invention, together with a collar on top of an existing stack from a furnace;

Figure 1A is a detail showing the fitting of the collar to the stack embodying the invention;

Figure 2 is a side cross-sectional view taken along the lines 2-2 of Figure 1, but with a modification of the collar and support;

Figure 3 is a cross-sectional view taken along the lines 3-3 of Figure 2;

Figure 4 is a cross-sectional view, similar to that of Figure 5, but showing the tubing in a different configuration surrounding the inner shell;

Figure 5 is a cross-sectional view taken along the lines 5-5 of Figure 4;

Figure 6 is a cross-sectional view of a preferred embodiment of the present invention;

Figure 7 is a view similar to Figure 6 showing the joinder of two sections illustrated in Figure 6;

Figure 8 is a cross-sectional view showing alternative locations for inlets and outlets;

Figure 9 is a view similar to Figure 7, but showing the tubing connected within the enclosed insulation;

Figure 10 is a cross-sectional view taken along the lines 10-10 of Figure 9; and

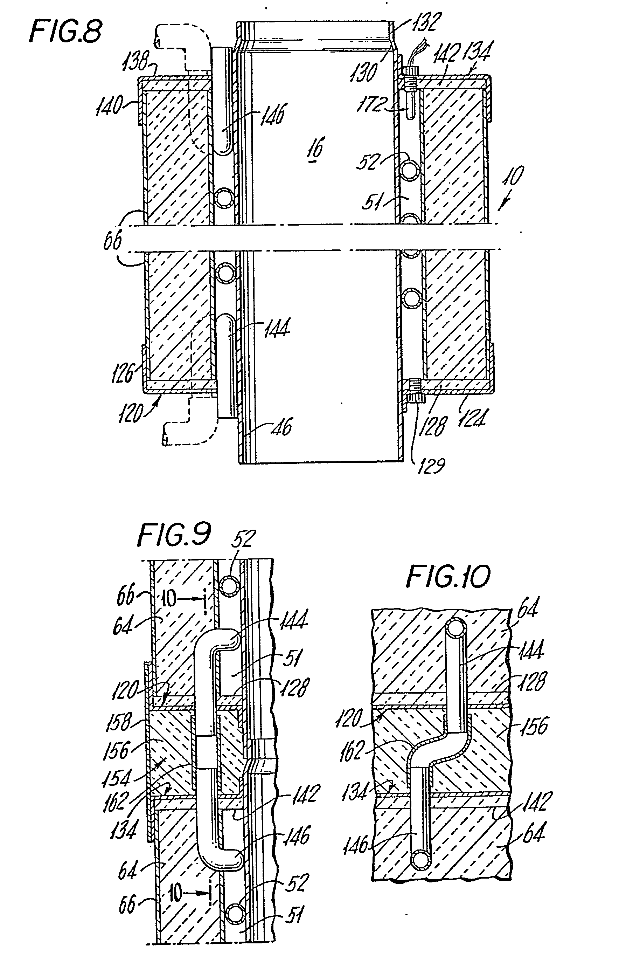

Figure 10 is a schematic view of a typical system utilizing the invention.

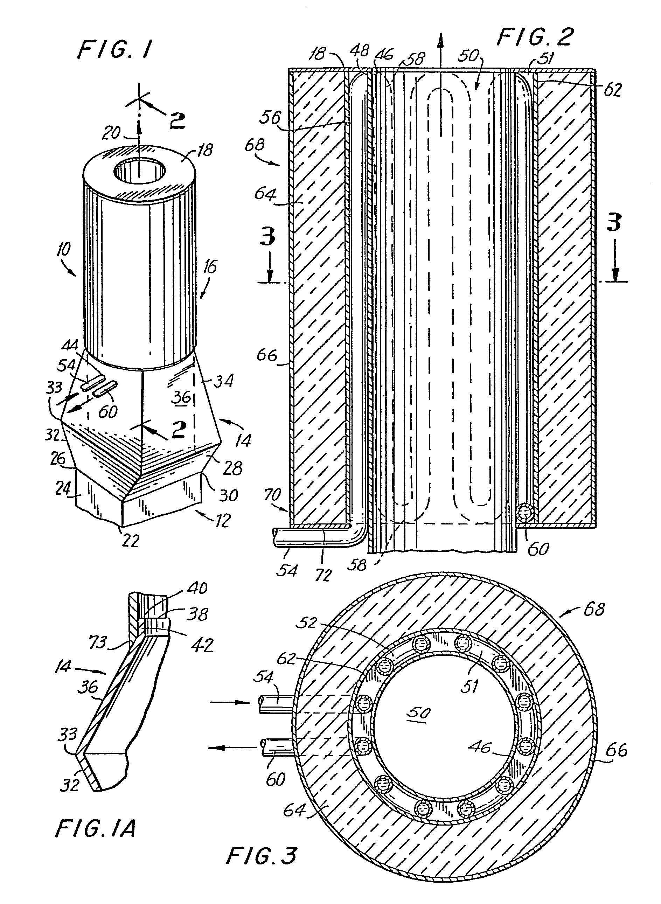

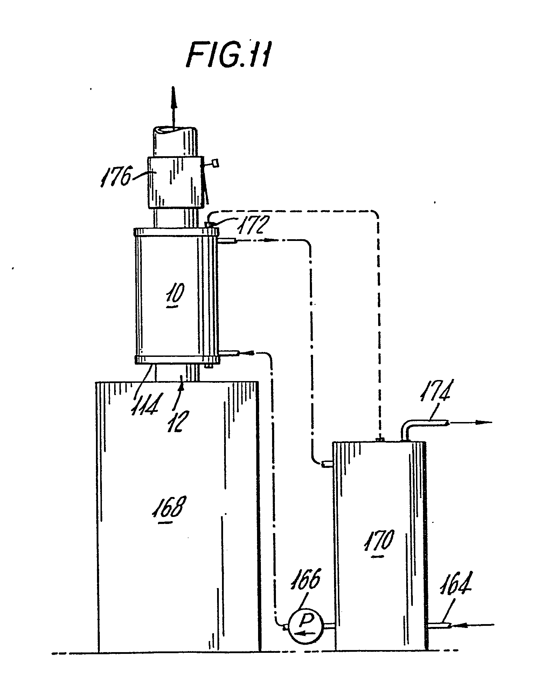

Turning in detail to the drawings and more particularly to Figures 1 and 11, there is shown a stack exhaust heat recycling system 10 embodying the present invention and broadly comprising an existing base stack 12 upon which is mounted a collar 14 on top of which is secured a stack 16 with a standard cap 18 on the top. The exiting exhaust gases are indicated by the arrow 20.

The base stack 12 has a lower bottom or base 22 which rests on the top of the furnace and above the fire. Depending upwardly from the base 22 are side walls 24 terminating in a top wall 26.

Positioned on top of the stack 12 is a collar 14 having a lower portion which in appearance is a reverse truncated pyramid shaped member 28 defined by a base 30 resting on the top of the top wall 26 of the stack 12, side walls 32, and terminating in its outwardly direction at edge 33. Positioned thereupon is an upright truncated pyramid shaped member 34 defined by side walls 36 and terminated by a top wall 38 (Figure 1A). The top wall has an upper rim 40 from which depends an upstanding ring 42 for the purpose hereinafter appearing. In addition, there are openings 44, also for the purpose hereinafter appearing. It is understood that any well known configuration may be adopted for the collar without departing from the invention.

The stack 16 is defined by an inner shell 46 (Figure 2) for defining a passage 50 which, in an illustrated embodiment, is generally cylindrical in shape. It is standard to have chimney passages which are cylindrical or they may be rectangular. The particular shape and design of the passage and the shells does not form a part of the present invention. The material used for the inner shell is not of critical importance, other than it must be capable of transferring heat with a low resistance. Such materials are well known in the art and are composed of any desired metallic alloy or general metal or synthetic as is currently used. An example is galvanized sheet metal or black stove pipe.

Adjacent to the outer wall 48 of the shell 46 is a compartment 51 containing tubing 52. The tubing forms an essential part of the invention and is defined by an inlet portion 54. The tubing may also be bonded directly to the outer wall 48 by means of spot welding, for example. The general tubing which is shown in Figure 2 extends in the vertical direction forming a vertical member 56 coupled together by U-members 58, the U-members being both at the top and the bottom of the stack. The final vertical drop terminates in an outlet 60. The tubing is manufactured of a material which can easily carry fluids, such as gases, oils and liquids, traversing the entire vertical height and around the horizontal dimensions of the stack withstanding the high temperatures from the exhaust gases and pressure within the system, and yet being capable of absorbing the heat from the exhaust gas which pass into the fluids contained therein. Such examples of acceptable tubing are well known alloys, metals and synthetic materials. An example is copper tubing. As a general rule, the pressure of water obtained from the local municipality or any standard pump is sufficient to drive the water to the required vertical height.

Depending upon the particular installation and the required performance, the tubing may be designed as a complete system from both its lower to upper extremities or can be joined together in stages such as by sweating, welding, brazing or by deep-seated compression coupling, steam fitting, etc.

Positioned on the other side of the tubing from the inner shell 46 is an intermediate shell 62. This shell is designed to protect the tubing and to assist in preventing the passage of the heat transferred from the gases to the tubing from passing further outwardly beyond the tubing. Thus this intermediate shell may be made from a material which has good insulating properties. An example of such a material is reflective coated metal. The shells 46, 62 define the compartment 51, creating a heat envelope within which the tubing lies.

On the other side of the intermediate shell and outwardly from the tubing is insulation 64, also desired to retain the heat from passing beyond the tubing. Examples are asbestos, fiber glass. In order to protect the insulation, the stack on its outer portion is defined by an outer shell 66 which may also be made of material, such as reflective coated metal, which has good insulating qualities as well as qualities to protect the stack from environmental conditions.

On the top of the outer shell 66, insulation 64, intermediate shell 62, and above the tubing 52 and the inner shell 46 is the cap 18. Such a cap is standard and well known in the smoke stack technology. Also positioned over the center passage 50 is a damper or spark arrestor 176 (Figure 11) which is also well known in the industry.

Depending down from the top portion 68 of the stack towards the bottom portion 70, there is shown one form of a bottom portion in Figure 2 having a bottom edge 72 supported above the piping. Another probably more preferrable form is shown in Figure 1A in which the stack has a knife-edge 73 and it is designed so that the stack fits right inside the ring 42 and rests on the upper portion of the walls 36 of the collar 14.

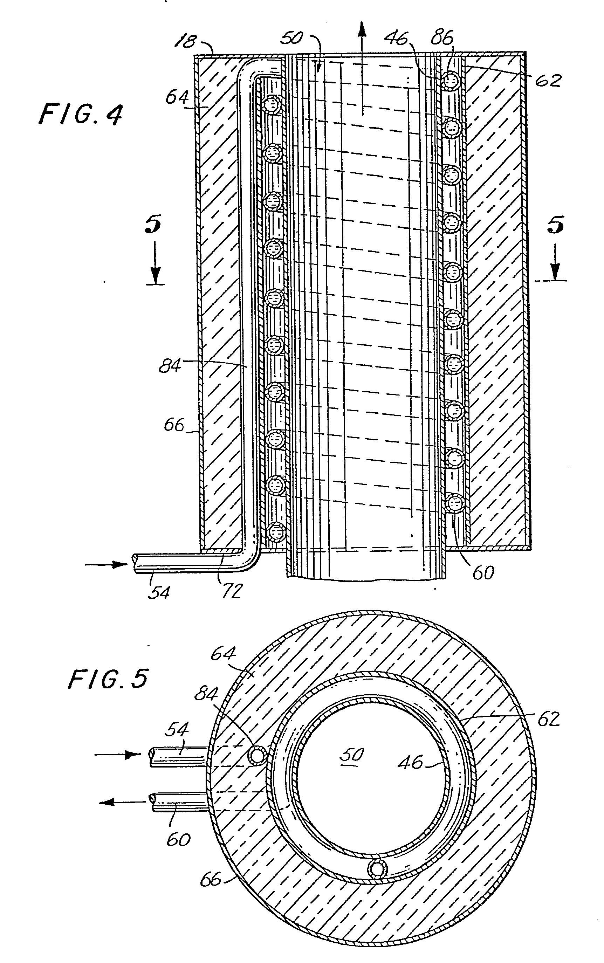

Turning to Figures 4 and 5, there is shown an alternative embodiment of the stack in which fluid from the inlet 54 is carried up to the very top of the stack and then, instead of there being a series of vertical turns being connected by U-shaped members, the tubing circles around the stack in a series of coils, until it reaches the bottom of the stack and the outlet. In this embodiment the vertical member 84 passes upwardly through the insulating material to the top of the stack where it thence turns in a horizontal direction and merges into the coiled tubing 86 which continues coiling around the stack until it reaches the outlet 60.

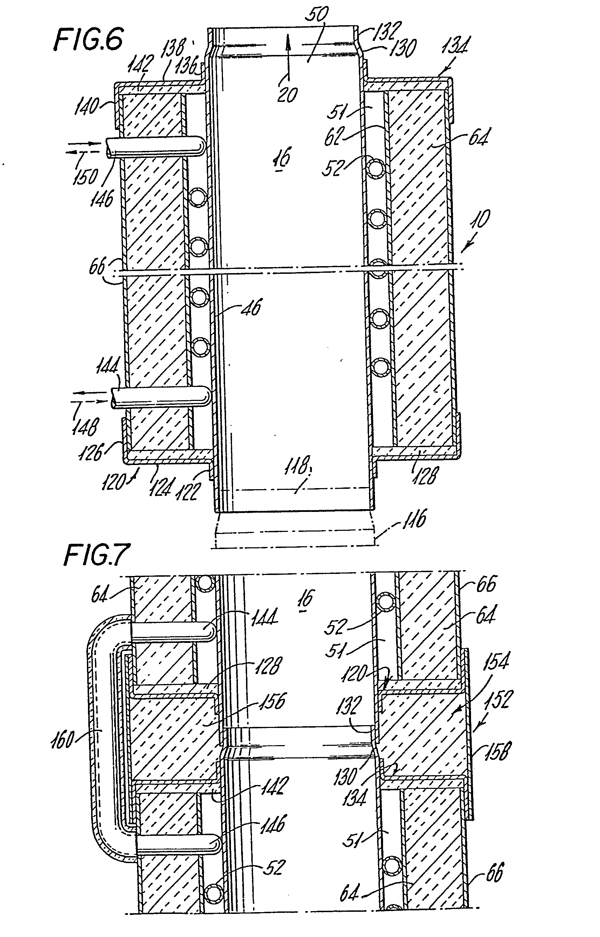

Turning to Figures 6 and 7, there is shown a preferred embodiment of the present invention in which like numerals are used to designate like parts. The unit 10 rests upon collar 114 of base stack 12. The collar includes a shoulder portion 116 which is inclined inwardly and terminates in a reduced diameter neck portion 118. Its outer diameter is just slightly less than the inner diameter of the stack 16 and provides a stable base for the support of the unit 10, similar to the joinder previously described and illustrated with respect to Figure 1A.

The unit 10 includes a bottom cap 120 which may be bonded at 122 to stack 16 in any well known manner and then has an annular shoulder 124 terminating in an upwardly extending lip 126. The unit may be made of standard materials utilized in the trade and has a doughnut-shaped layer of insulation 128 received therein.

Depending upwardly from the bottom cap are the previously described features of the invention, the compartment 51, shell 46 and intermediate shell 62, forming the heat envelope, surrounded by insulation 64 and outer shell 66. The shell 46 has an upper shoulder 130 and terminates in a reduced diameter neck portion 132. The unit 10 is received within the bottom cap 120 and supported thereby.

The top of the unit is enclosed by a top cap 134 which is essentially mirror-symmetrical to the bottom cap and includes a sleeve 136 which may be bonded to the stack 16, an outwardly depending annular shoulder 138 terminating in a downwardly extending lip 140. Positioned within the recess is insulation 142. The shell 16    usually extends beyond the sleeve 136.

In this embodiment the tubing 52 is illustrated as having the inlet/outlet 144, 146 as passing through the insulation. The flow of fluid may be in either direction as indicated by the arrows 148,150.

Figures 7, 9 and 10 illustrate means for joining two or more units 10 together on those occasions when it is desired to do so. Figure 7 shows an intermediate joinder 152, which is essentially a combination of the top and bottom caps of two units. Thus the joinder is surrounded on the outside by insulation 128, 142 surrounding member 154, the central portion of which is filled within intermediate layer 156 of insulation, the member and insulation being covered by an outer plate 58. The adjacent inlet/outlet members 144,146 are connected by tubing 160. In Figures 9 and 10 the tubing passes through the annular walls of intermediate shell, the insulation, and the member 154, joined by an angle tubing 162 as best shown in Figure 10. The inlet/outlet 144,146 pass   through the intermediate shell 62 and then parallel to it, passing through the caps, to be joined by the tubing 160.

In a similar fashion the inlet/outlet 144, 146 shown in Figure 8 pass out of the bottom and top, respectively of a single unit 10 via the compartment 51. This figure also illustrates the presence of a drain plug 129 and the upper end of double station thermostat 172.

Figure 11 is a schematic of a typical system utilizing heat from the chimney to raise the temperature of incoming tap water. Water is introduced from a water source 164 which is typically about $10^{o}$C. The water passes into the tempering tank 170, which is connected via a circulating pump 166 to unit 10 which is heated by flue gases from the furnace 168. The tank 170 and unit 10 can be monitored by a double station thermostat 172. An an example, when the temperature in unit 10 is  $8^{o}$ higher than in tank 170, the pump 166 starts circulation. The heated water is drawn off to a hot water tank 174, etc. at a temperature which is substantially higher than it was when introduced from the water source 164.

Of course, there will exist conditions when a circulating pump 166 or some other means of circulation, such as gravity or tap pressure, will be present, but a temperature monitoring device will not be necessary.

Examples would be a military field installation or in a vacation cabin with a free standing fireplace.

It is understood that numerous other design configurations of the  tubing surrounding the stack may be utilized. An example (as illustrated) would be to reverse the coils and introduce the fluid at the bottom of the stack. Another example would be to terminate the outlet at the top of the stack, or the inlet and outlet could pass through the insulation (also illustrated). Furthermore, it is feasible to place appropriate shaped fins on the tubing to increase its conduction area. Other techniques to do this include cutting slits partially into the tubing wall, or shredding and then wrapping foil around the tubing.

CLAIMS

1. A stack exhaust heat recycling system utilizing the heat present in exhaust gases to heat a fluid which comprises an exhaust passage defined by a first shell; an intermediate shell encircling said first shell defining a space therebetween;

tubing means positioned within the space to circulate the fluid proximate the first shell; and

insulation means proximate the tubing means but on the other side of the intermediate shell whereby heat is transferred from the exhaust gases into the tubing means but is substantially retained by the said means, whereby fluids may be elevated in temperature prior to the introduction to a desired position within a system.

2. The invention according to claim 1, the tubing means passing upwardly in a vertical direction along the length of the shell and then being disposed downwardly in a vertical direction, parallel to the first portion, the final vertical member being connected to the outlet.

3. The invention according to claim 1, the tubing means including a vertical member passing upwardly to the top of the shell and ultimately terminating at the outlet at the bottom of the shell.

4. The invention according to claim 1, the first shell being a smoke stack, a collar positioned beneath and supporting said stack.

5. The invention according to claim 4, the upper edge of the collar including an upstanding rim received within the stack, the collar further containing means for accommodating inlet and outlet portions of the tubing means.

6. The invention according to claim 2, the first shell being a smoke stack, a collar positioned beneath and supporting said stack.

7. The invention according to claim 3, the first shell being a smoke stack, a collar positioned beneath and supporting said stack.

8. The invention according to claim 1, the insulation means including an outer shell and insulation positioned between the intermediate shell and the outer shell.

9. The invention according to claim 8, the insulation means further including a cap covering the top of the intermediate shell, insulation and the outer shell.

10. The invention according to claim 1, a base shell supporting said inner shell, said inner shell, tubing means, intermediate shell, insulation and outer shell being substantially surrounded at the ends thereof by a bottom cap and a top cap.

11. The invention according to claim 10, said caps having an insulation layer abutting said ends.

12. The invention according to claim 11, the caps having a sleeve secured to said inner shell, an outward annular shoulder depending from said sleeve, and an upward lip depending from said shoulder, said shoulder and lip forming a recess, said insulation layer secured within said recess, said ends received within said recess.

13. The invention according to claim 11 or 12, said inner shell extending beyond said shell cap.

14. The invention according to claim 13, the caps, shells, tubing and insulation forming a unit, means to interconnect at least two units, said means including insulation means between the top cap of the lower unit and the bottom cap of the upper unit, and means to connect the tubing of the units.

15. The invention according to claim 1, a furnace providing the exhaust gases to heat the fluid, the system further including a source of fluid at an ambient temperature, means to accumulate said fluid and circulate fluid between the tubing means and the accumulating means; and means to draw off fluid at an elevated temperature within the accumulation means, when such fluid is desired to be transported to another location.

16. The invention according to claim 15, further including means to monitor the temperature differential between the tubing means and the accumulation means so that when the temperature gradient reaches a certain level, circulation is commenced between the two means to raise the temperature of the fluid within the accumulation means, so that when a desired elevated temperature is reached within the circulation means, the fluid may be transported to another location.

FIG. 1

FIG. 2

FIG. 1A

FIG. 3

FIG.4

FIG.5

FIG.6

FIG.7

FIG.8

FIG.9

FIG.10

# FIG.11

**European Patent Office**

**EUROPEAN SEARCH REPORT**

## DOCUMENTS CONSIDERED TO BE RELEVANT

| Category | Citation of document with indication, where appropriate, of relevant passages | Relevant to claim |
|---|---|---|
| X | DE - A - 2 606 639 (STEUBER)<br>* Whole document * | 1,4,5, 8-10, 15 |
| | -- | |
| | DE - A - 2 614 749 (SCHRUFF)<br>* Whole document * | 1,2 |
| | -- | |
| | FR - A - 2 426 235 (VAILLANT)<br>* Page 1, line 30 - page 2, line 2; figures * | 1,15, 16 |
| | -- | |
| | US - A - 1 953 302 (JOHNSTON)<br>* Figure 2 * | 2 |
| | -- | |
| | DE - A - 2 915 045 (AERNE)<br>* Figure 1; page 5 * | 2 |
| | ---- | |

### CLASSIFICATION OF THE APPLICATION (Int. Cl.³)

F 28 D 21/00
F 24 D 3/00

### TECHNICAL FIELDS SEARCHED (Int. Cl.³)

F 24 D
F 28 D
F 24 B

### CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 13-03-1981 | VAN GESTEL |

EPO Form 1503.1    06.78